Europäisches Patentamt

European Patent Office

Office européen des brevets

(19)

(11) Publication number: **0 463 732 A2**

## (12) EUROPEAN PATENT APPLICATION

(21) Application number: **91304744.5**

(22) Date of filing: **24.05.91**

(51) Int. Cl.⁵: **G06F 11/32**

(30) Priority: **28.06.90 US 546056**

(43) Date of publication of application:
**02.01.92 Bulletin 92/01**

(84) Designated Contracting States:
**DE FR GB**

(71) Applicant: **International Business Machines Corporation**
**Old Orchard Road**
**Armonk, N.Y. 10504(US)**

(72) Inventor: **Clark, Andrew Lewis**
**242 Croton Lake Road**
**Katonah, New York 10536(US)**

(74) Representative: **Moss, Robert Douglas**
**IBM United Kingdom Limited Intellectual**
**Property Department Hursley Park**
**Winchester Hampshire SO21 2JN(GB)**

(54) **Method and system for animating the execution of a computer program.**

(57) During an animation of a computer program's execution, program statements 302 are displayed using multiple colours according to the respective frequency of execution of each statement. As a program statement becomes the current executed statement during the animation, the statement's frequency of execution is calculated as the number of times the statement has been executed so far during the animation, divided by the total number of statement executions throughout the animation. A display colour is assigned based on whether the statement's execution frequency has reached one of two or more thresholds. The multi-coloured display of program statements based on thresholds of execution frequency assists the programmer in understanding the operation of the program.

FIG. 2

Field of the Invention

This invention relates to the animation of a computer program's execution, and more particularly to the use of colour thresholding therein.

Background of the Invention

A major challenge facing software testers is that of understanding the effect that test data has on a subject program. Techniques such as program animation bridge the gulf between the abstractness of test data and the idiomatic logic of an application under test, greatly enhancing the programmer's understanding of his or her program's operation. The programmer can then use this understanding to change the program's design to improve its performance.

Animation graphically displays the effect of executing one or more test cases for a computer program. The prior art in program animation may be categorized into two general areas: interpretive animation including SMALLTALK, ACTOR, etc., and executive animation such as in IBM's INSPECT FOR PL/I AND C/370 and PLITEST products which animate in "real time."

An interpretive animator uses an execution trace of a previous execution of the program as the source of its information about the program's execution. Interpretive animators are in control at all times, making possible such functions as reverse execution and path tracing. Duisberg, U.S. Patent No. 4,821,220, entitled "System for Animating Program Operation and Displaying Time-based Relationships," discloses an interpretive-type animator for software objects. Duisberg's system uses time-based triggers to control a replay of an execution. In operation, the system records the original execution, saving time stamps at critical moments during the execution. Later, during replay, these time stamps are used to regulate and characterize the original program execution.

The program debuggers PLITEST, COBTEST and INSPECT of the International Business Machines Corporation (IBM) are all examples of executive animators. These products operate in real-time, and use colour to highlight only the current focus of execution (i.e., the current executed statement or module) as displayed on a user's screen.

Algorithm animation is a distant cousin of interpretive and executive animation. Algorithm animators provide a scripted animation depicting a variety of classical programming data structures. These structures are animated so as to show traversal and data manipulation. Brown et al., U.S. Patent No. 4,736,321, entitled "Communication Method Between an Interactive Language Processor Workspace and External Processes" is an example of an algorithm animator. Brown et al. disclose the invocation of an external process without having to suspend a currently executing process, passing arguments to an external process and receiving results therefrom in a currently executing APL workspace.

Saito et al., U.S. Patent No. 4,730,315, entitled "Diagrammatic Method of Testing Program," discloses a method for correlating FORTRAN source code and a directed acyclic graph ("digraph") thereof in a step, edit, and retry interactive debug facility. Synchronism is preserved between the source code and the digraph by use of FORTRAN reserved words as pointers.

Beckett, U.S. Patent No. 4,080,650, entitled "Facilitating Return From an On-line Debugging Program to a Target Program Breakpoint," discloses an interactive debug utility in which control is selectively passed from within one process to an external process and returned via breakpoints.

There is therefore a clear need for animating the execution of a computer program in a manner which visually illustrates how the parts of a program respond to various test cases.

Disclosure of the Invention

Accordingly, the invention provides a method for animating the execution of a computer program by animating a representation of parts of the program on a computer in accordance with the execution of the program, said method being characterised by the steps of: a) selecting first and second threshold levels, said second threshold level being greater than said first threshold level; b) counting occurrences during execution of a selected event in a first part of the program; c) detecting when the number of occurrences of said selected event reaches the first threshold level, and colouring the displayed representation of said first program part a first colour thereupon; d) continuing counting said occurrences; e) and detecting when the number of occurrences of said selected event reaches the second threshold level, and colouring the displayed representation of said first part with a second colour thereupon, said second colour being different from said first colour.

Preferably the parts of the program comprise one or more statements of program source code, and the selected event comprises execution of said first part of the program. Typically the method would be used following the initial step of executing the program to produce an execution trace, - ie as an interpretive animator, although the method can also be used with executive animators. In a preferred embodiment the user can select the colour associated with each threshold level.

Thus a visual representation of parts of the program is produced which is animated in response to execution of the program. Thresholds are set for the selected event occurences for the program parts, and the "threshold-reaching" parts are displayed in colour. In particular, when occurrences of a selected event for a given part of the program reach a first threshold, the displayed representation of that part is given a first colour. Later, when a higher second threshold for that part is reached that too is detected and the displayed representation of the part is coloured a second threshold colour. The second threshold colour is different from the first colour.

The invention also provides a computer system including: a display device; means for displaying a representation of parts of a computer program on the display device; and means for animating the displayed representation in response to execution of the program, including means for colouring at least some of the displayed parts; said system being characterised in further including: a) means for selecting first and second threshold levels, said second threshold level being greater than said first threshold level; b) means for counting occurrences during execution of a selected event in a first part of the program; c) means for detecting when the number of occurrences of said selected event reaches the first threshold level; d) means for colouring the displayed representation of said first program part a first colour thereupon; e) means for detecting when the number of occurrences of said selected event reaches the second threshold level; f) and means for colouring the displayed representation of said first part with a second colour thereupon, said second colour being different from said first colour.

Coloured animation of the frequency of execution of the tested program's parts or "objects" vividly illustrates the program's operation, providing a "moving picture" of the program as it is executed. The addition of threshold colouring graphically illustrates the "hot spots" of a program.

The threshold-based colouring may be performed on a graphical representation of the program rather than on the source code. Also, beyond threshold colouring of statement executions, other events such as input/output (I/O) requests, exceptions conditions and errors may be monitored and displayed using threshold colours. Further, beyond frequencies of occurrences, other measures of events such as absolute numbers (e.g., >0 error conditions, >100 I/O requests per second) may be monitored and displayed using threshold colours. The animation of the execution trace may be done in both forward and reverse directions. In the reverse direction the numbers of occurrences would be decremented, rather than incremented as for the forward direction. Furthermore, the use of threshold colouring is equally applicable to executive and algorithmic animation as to the interpretive animation discussed above.

Brief Description of the Drawings

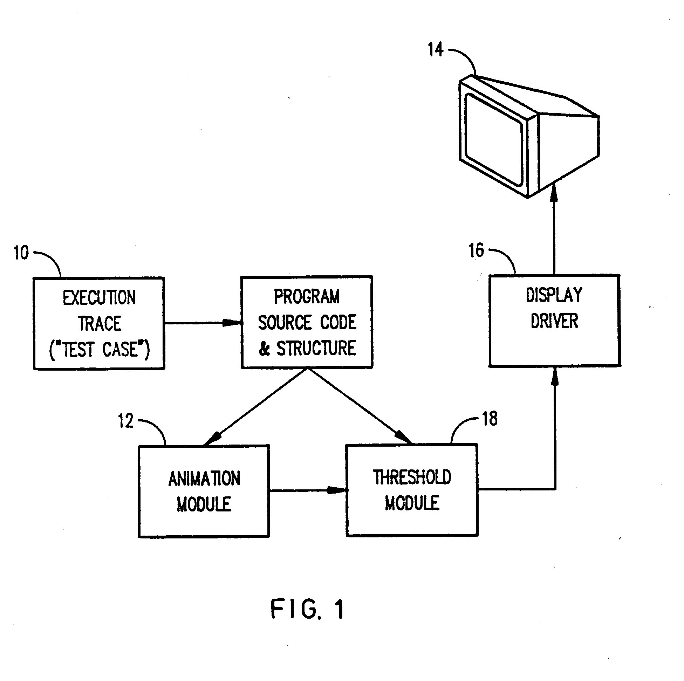

FIG. 1 is a block diagram of a computer system for colouring an animation of a computer program execution based on statement execution frequencies.

FIG. 2 is a flowchart of a method for colouring an animation of a computer program execution based on statement execution frequencies.

FIG. 3 shows an example of the representation of program source code. Each of the symbols would be coloured in accordance with the present invention.

FIG. 4 shows examples of typical windows that would be superimposed upon the screen of Figure 3 during the animation: Figure 4a shows the window used to set the colour theshold levels; Figure 4b shows the code corresponding to the symbol Test Data in Figure 3; and Figure 4c shows the panel used to control the animation.

Detailed Description

This invention provides a coloured animation of the execution of a computer program (the "tested program") which is being tested. In this context animation is the process of recreating the execution of a computer program to understand and test its operation. Coloured animation of the frequency of execution of the tested program's parts or "objects" vividly illustrates how the program responds to various test cases, and thereby helps the program developer to refine the program's design.

The method of this invention allows multi-colour animation of a program's statements, displaying the statements in colours according to certain thresholds of execution frequency, such as the number of times each statement has been executed relative to the total number of statement executions during the test case.

As the program is animated, when a given threshold is reached for a particular statement, the colour in which the statement is displayed changes to visually indicate that a threshold was reached. The colours incorporate various hues to immediately graphically identify multiple thresholds. The thresholds are user-selectable and continuously variable during the animation.

The method typically uses an execution trace 10 of the tested program produced during execution (see Table 2 for an example of an execution trace). The execution trace includes a breakdown of the number of times each statement of the tested program was executed. The execution trace is created by breakpoints inserted into the tested program during its compilation. The breakpoints cause certain state information to be recorded when the tested program is later executed. Creation of execution traces is well known in the art, and will not be discussed further except as necessary to understand the invention.

The animation is performed by an animation module 12 of conventional design. The animation module reads through the execution trace, determining the next statement to be executed based on the execution trace. This animation module is of the interpretive type discussed above, since is relies on the execution trace 10. The choice of animation module is a matter of design choice, there being several suitable animation techniques known in the art. Accordingly, the animation module 12 is not discussed further. The animated display is produced on a colour video display device 14 such as a CRT by means of a conventional display driver 16.

The threshold module 18 handles the calculation and colouring of program statements selected by the animation module from the execution trays. After the animation module determines the next executed statement, threshold module calculates the execution frequency for that statement. The execution frequency for any statement is equal to the number of times that statement has been executed so far during the execution trace, divided by the total number of statement executions throughout the entire execution trace. Thus as the animation proceeds through the trace, the execution frequencies for the program statements increase as the statements are executed. In the beginning, while all statements have low execution frequencies, they are displayed in a default colour, with only the current executed statement being displayed in a different colour.

When a particular statement in the program reaches the first threshold frequency selected by the user, the threshold module 18 displays that statement in the threshold colour assigned to the first threshold, rather than in the default colour for the current executed statement. Having reached the first threshold, the statement remains in the first threshold colour even after execution passes to the next statement. Thus, as animation proceeds through the execution trace, statements reaching frequency thresholds assume those thresholds, respective colours thereby visually indicating those statements which are executed most frequently. When the animation of the execution trace is complete, the colours of the statements displayed on the CRT 14 immediately identify in distinctive hues those statements which were executed most.

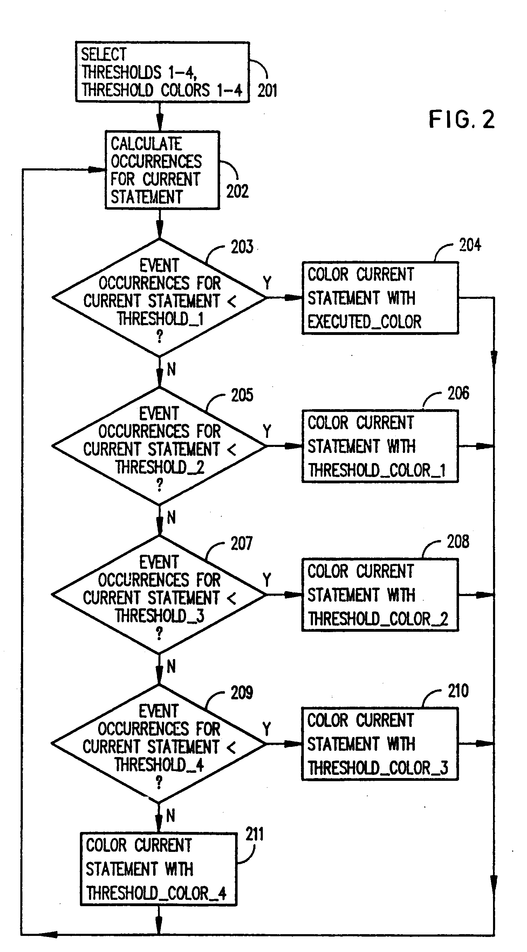

This method is shown in the flow chart of FIG. 2 and the pseudocode of Table 1. Referring first to the flow chart of FIG. 2, after the frequency thresholds and threshold colours ore selected 201, the animation loops through each of the executed statements. As each executed statement becomes the "current statement" its number of executions is incremented by one and its execution frequency is recalculated 202. If its execution frequency is lower than the first threshold 203, the current statement is coloured with the normal colour for the current executed statement 204, rather than one of the threshold colours. However, if the first threshold is reached, then the current statement's execution frequency is tested against the second threshold frequency 205. If the first threshold has been reached 203 but the second threshold has not 205, then the statement is coloured with the first threshold colour 206. Similarly, the current statement is coloured with the second and third threshold colours 208, 210. If the fourth threshold has been reached, then the statement is immediately coloured with the fourth threshold colour 211. After the statement has been coloured on the display, the method loops to take up the next statement in the animation.

Referring now to the pseudocode of Table 1, when the execution trace is first opened 301, a total number of statement executions in the trace is stored 302. The fourth frequency thresholds and their respective threshold colours are obtained from the user 303 and 306, together with the default colours for the current executed statement 307 and for all other statements 308. An infinite do-loop 311-330 takes up each executed statement in turn from the execution trace 312. A table of the number of times each statement has been executed so far during the trace is updated for the current statement 313, and the current statement's execution frequency is calculated 314. The current statement's execution frequency is then compared in turn with each of the frequency thresholds 315-322. As discussed above for the flow chart of FIG. 2, the current statement is coloured with the threshold colour of the highest threshold exceeded by that statement or with the default coloured one for the current executed statement if no threshold has been reached. The current executed statement is then displayed using the colour assigned at lines 315-324, and the next statement in the trace is taken up 330.

4

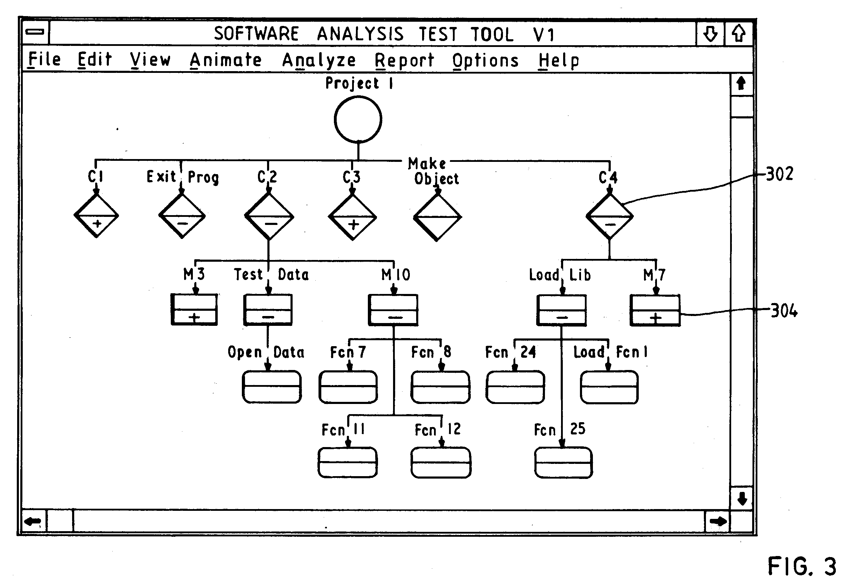

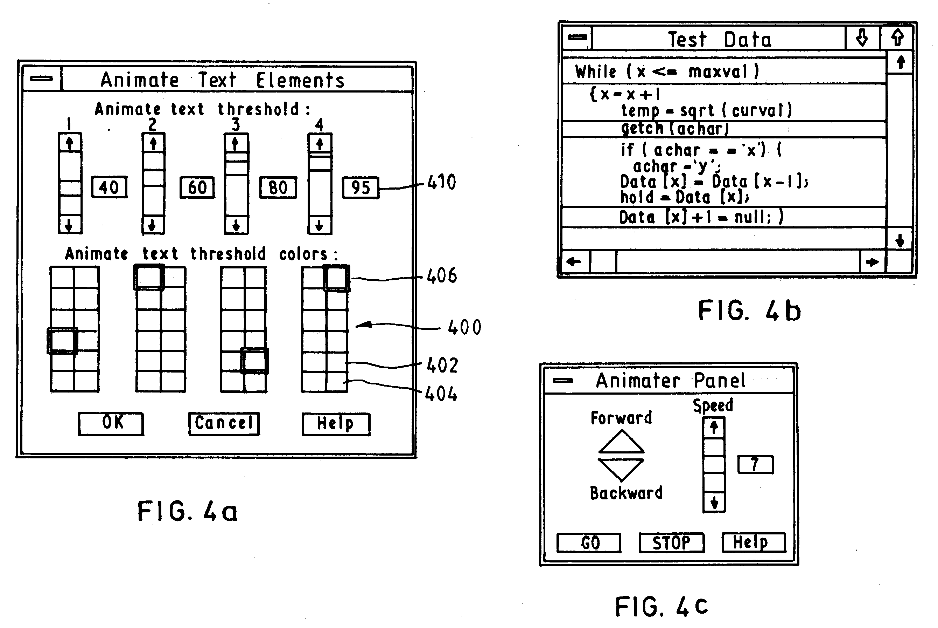

Figures 3 and 4 show the operation of an animation and thresholding system. Figure 3 shows a representation of a program in which each of the symbols 302, 304 corresponds to a program source code statement, or a program module (an example of such a module corresponding to the symbol for TEST DATA in Figure 3 is shown in Figure 4b). To set the threshold levels, the panel shown in Figure 4A is used. This panel allows up to four threshold levels to be set, each of which has a palette 400 of different colours 402, 404 associated with it (typically all the palettes would be the same). The user then selects a colour 406 from the palette and a threshold value 410 for each threshold level. To actually run the animation, the panel in Flgure 4c is used, and this allows the user to control both the speed and direction of the animation. During the animation, the symbols 302, 304 will all be coloured (not shown) to indicate whether they have passed any of the thresholds set, and change colour each time they pass a new threshold. the current executed symbol will also be indicated by a different colour.

Typically the invention is applicable to a general purpose digital computer programmed with a display device such as a CRT (eg an IBM PS/2 personal computer of IBM). The multi-coloured display produced of the execution frequency of program statements allows the programmer to immediately grasp the total gestalt of the program's execution.

## TABLE 1

```
301   Open execution traace
302   TotalExecutions = total number of
      statement executions in trace
303   Get FreqThreshold(1),              /* User-specified    */
      ThresholdColor(1)                  /* threshold values  */
304   Get FreqThreshold(2),              /* and colors        */
      ThresholdColor(2)
305   Get FreqThreshold(3),
      ThresholdColor(3)
306   Get FreqThreshold(4),
      ThresholdColor(4)
307   Get ExecutedColor                  /* Default color     */
                                         /* for an executed   */
                                         /* statement         */
308   Get DefaultColor                   /* Default color     */
                                         /* for all other     */
                                         /* statements        */
309   PrevStmt = none
310   PrevColor = none

311   DO forever
312       Get CurrentStmt from trace     /* Next executed     */
                                         /* statement         */
313       Increment StmtExecutions(CurrentStmt)
          by 1
314       StmtFreq = StmtExecutions(CurrentStmt)
          / TotalExecutions
315   IF StmtFreq < FreqThreshold(1) THEN
316       StmtColor = ExecutedColor
317   ELSE IF StmtFreq < FreqThreshold(2) THEN
318       StmtColor = ThresholdColor(1)
319   ELSE IF StmtFreq < FreqThreshold(3) THEN
320       StmtColor = ThresholdColor(2)
321   ELSE IF StmtFreq < FreqThreshold(4) THEN
322       StmtColor = ThresholdColor(3)
323   ELSE
324       StmtColor = ThresholdColor(4)

325   IF PrevColor = ExecutedColor THEN
326       Display PrevStmt using         /* Return previous   */
          DefaultColor                   /* statement to      */
                                         /* unexecuted color  */
327   Display CurrentStmt using          /* Display current   */
      StmtColor                          /* executed statement*/
                                         /* in threshold or   */
                                         /* normal color      */
328   PrevStmt = CurrentStmt
329   PrevColor = StmtColor
330 END
```

6

EP 0 463 732 A2

TABLE 2

```
IGZ101I COBTEST
>>> QUALIFY primegen
IGZ101I COBTEST
>>> trace entry
IGZ101I COBTEST
>>> trace para
IGZ101I COBTEST
>>> trace name
IGZ101I COBTEST
>>> when satt (tally >= 0) (go)
IGZ101I COBTEST
>>> restart
IGZ107I ENTERING PRIMEGEN
IGZ106I TRACING PRIMEGEN
IGZ109I 000028.1  DUMMY-SECTION
IGZ103I WHEN SATT PRIMEGEN.000028.1
IGZ103I WHEN SATT PRIMEGEN.000029.1
IGZ103I WHEN SATT PRIMEGEN.000030.1
IGZ103I WHEN SATT PRIMEGEN.000031.1
IGZ103I WHEN SATT PRIMEGEN.000032.1
IGZ103I WHEN SATT PRIMEGEN.000033.1
IGZ103I WHEN SATT PRIMEGEN.000034.1
IGZ109I 000049.1 CALC-LOOP
IGZ103I WHEN SATT PRIMEGEN.000049.1
IGZ103I WHEN SATT PRIMEGEN.000050.1
IGZ103I WHEN SATT PRIMEGEN.000052.1
IGZ109I 000055.1
IGZ103I WHEN SATT PRIMEGEN.000055.1
IGZ109I 000058.1
IGZ103I WHEN SATT PRIMEGEN.000058.1
IGZ103I WHEN SATT PRIMEGEN.000059.1
IGZ103I WHEN SATT PRIMEGEN.000060.1
IGZ109I 000074.1 BUMP-TEST-NUMBER
IGZ103I WHEN SATT PRIMEGEN.000074.1
IGZ103I WHEN SATT PRIMEGEN.000075.1
IGZ109I 000049.1 CALC-LOOP
IGZ103I WHEN SATT PRIMEGEM.000049.1
IGZ103I WHEN SATT PRIMEGEN.000050.1
IGZ103I WHEN SATT PRIMEGEN.000052.1
IGZ109I 000053.1
IGZ103I WHEN SATT PRIMEGEN.000053.1
IGZ109I 000074.1 BUMP-TEST-NUMBER
IGZ103I WHEN SATT PRIMEGEN.000074.1
IGZ103I WHEN SATT PRIMEGEN.000075.1
IGZ109I 000049.1 CALC-LOOP
IGZ103I WHEN SATT PRIMEGEN.000049.1
IGZ103I WHEN SATT PRIMEGEN.000050.1
IGZ103I WHEN SATT PRIMEGEN.000052.1
IGZ109I 000055.1
IGZ103I WHEN SATT PRIMEGEN.000055.1
IGZ109I 000058.1
```

## Claims

1.  A method for animating the execution of a computer program by animating a representation of parts of the program on a computer in accordance with the execution of the program,

7

EP 0 463 732 A2

said method being characterised by the steps of:

selecting (201) first and second threshold levels, said second threshold level being greater than said first threshold level;

counting (202) occurrences during execution of a selected event in a first part of the program;

detecting (203) when the number of occurrences of said selected event reaches the first threshold level, and colouring (206) the displayed representation of said first program part a first colour thereupon;

continuing counting said occurrences;

and detecting (205) when the number of occurrences of said selected event reaches the second threshold level, and colouring (208) the displayed representation of said first part with a second colour thereupon, said second colour being different from said first colour.

2. The method of claim 1, wherein said parts of the program comprise one or more statements of program source code.

3. The method of claim 1 or 2, wherein the selected event comprises execution of said first part of the program.

4. The method of any preceding claim, further comprising the initial step of executing the program to produce an execution trace (10).

5. The method of any preceding claim, wherein the step of selecting first and second threshold levels includes the step of selecting said first and second colours to be respectively associated therewith.

6. A computer system including: a display device (14); means for displaying (16) a representation of parts of a computer program on the display device; and means for animating the displayed representation in response to execution of the program (12), including means for colouring at least some of the displayed parts;

said system being characterised in further including:

a) means for selecting first and second threshold levels, said second threshold level being greater than said first threshold level;

b) means for counting occurrences during execution of a selected event in a first part of the program;

c) means for detecting when the number of occurrences of said selected event reaches the first threshold level;

d) means for colouring the displayed representation of said first program part a first colour thereupon;

e) means for detecting when the number of occurrences of said selected event reaches the second threshold level;

f) and means for colouring the displayed representation of said first part with a second colour thereupon, said second colour being different from said first colour.

8

FIG. 1

FIG. 2

FIG. 3

EP 0 463 732 A2

EP 0 463 732 A2

## Animate Text Elements

Animate text threshold :

1   2   3   4

[40]  [60]  [80]  [95] ——410

——406

——400

——402
——404

Animate text threshold colors :

[OK]   [Cancel]   [Help]

FIG. 4a

## Test Data

```
While ( x <= maxval )

{ x = x + 1
    temp = sqrt ( curval )
    getch ( achar )

    if ( achar = = 'x') {
        achar = 'y';
    Data [x] = Data [x-1];
    hold = Data [x];

    Data [x] +1 = null; )
```

FIG. 4b

## Animater Panel

Forward                Speed

[7]

Backward

[GO]   [STOP]   [Help]

FIG. 4c